# EUROPÄISCHE PATENTANMELDUNG

(11) **EP 4 167 586 A1**
(43) Veröffentlichungstag der Anmeldung: **19.04.2023**
(21) Anmeldenummer: 22201730.3
(22) Anmeldetag: 14.10.2022
(51) Int. Cl.: H04N 23/69, H04N 23/695, H04N 23/66, H04N 23/61, H04N 23/80, H04N 23/23, G08B 13/196

(54) **VERFAHREN ZUR STEUERUNG EINER KAMERA EINES GERICHTSSAAL-MEDIENSYSTEMS**

(30) Priorität: 14.10.2021 DE 102021126610; 25.01.2022 DE 102022101708
(71) Anmelder: COCOSOFT Systems GmbH, 13581 Berlin (DE)
(72) Erfinder: HESTERBERG, Jan Christian, 13503 Berlin (DE)
(74) Vertreter: Dantz, Dirk

(57) **Zusammenfassung**

Die Erfindung betrifft ein Verfahren zur Steuerung einer steuerbaren Kamera, mit dem die steuerbare Kamera in der Höhe bzw. Tiefe und seitlich schwenkbar ist und deren Zoom steuerbar ist, sowie ein Gerichtssaal-Mediensystem mit einem Signalempfänger, einer steuerbaren Kamera einer Steuereinheit und einem Speicher, dadurch gekennzeichnet, dass über den Signalempfänger ein Signal empfangbar und die Position des Signals lokalisierbar ist, wobei auf der Steuerung ein Softwareprogramm ausführbar ist, durch das die steuerbare Kamera in eine im Speicher abgelegte vordefinierte Einstellung einstellbar ist.

## Beschreibung

Die Erfindung betrifft ein Verfahren zur Steuerung einer steuerbaren Kamera, mit dem die steuerbare Kamera in der Höhe bzw. Tiefe und seitlich schwenkbar ist und deren Zoom steuerbar ist, sowie ein Gerichtssaal-Mediensystem mit einem Signalempfänger, einer steuerbaren Kamera einer Steuereinheit und einem Speicher, dadurch gekennzeichnet, dass über den Signalempfänger ein Signal empfangbar und die Position des Signals lokalisierbar ist, wobei auf der Steuerung ein Softwareprogramm ausführbar ist, durch das die steuerbare Kamera in eine im Speicher abgelegte vordefinierte Einstellung einstellbar ist.

### Stand der Technik

Steuerbare Kameras sind aus dem Stand der Technik bekannt. Steuerbare PTZ-Kameras können sich nach oben und unten sowie seitlich bewegen. Diese Funktion wird als PTZ bezeichnet, wobei das "P" für engl. pan ,schwenken' und das "T" für tilt ,neigen' steht. Das "Z" kennzeichnet eine Zoomfunktion. Steuerbare Kameras können feste oder sich bewegende Objekte erfassen und zur besseren Identifizierung Bildausschnitte vergrößern. Kombiniert werden diese PTZ-Kameras mit zusätzlichen Funktionen, wie z.B. dem Autotracking. Damit wird eine Person erfasst und verfolgt. PTZ-Kameras werden z.B. zur Live-Überwachung eingesetzt. Straftaten können z.B. in Flughäfen oder in Stadien so schnell erkannt werden, dass das Wachpersonal zeitnah einschreiten kann. Aus der PTZ-Funktion ergeben sich Vor- und Nachteile: Durch ihre Schwenk- und Neigetechnik können sie einen großen Bereich abtasten. Andererseits ist der Bereich, den sie nicht einsehen, ungeschützt. Das Tracking wird über Bewegung von Objekten bzw. Menschen und/oder audiobasiert durchgeführt. Bei fortschrittlichen Videokonferenzsystemen mit PTZ-Kameras wird hierbei die PTZ-Kamera auf den gegenwärtig sprechenden Teilnehmer geschwenkt und auf sein Gesicht gezoomt.

Nachteil an den gegenwärtigen Lösungen ist, dass wichtige Ereignisse abseits vom gegenwärtigen Sprechenden nicht erfasst werden. So ist es insbesondere während Gerichtsverhandlungen neben den Wortmeldungen der Verfahrensbeteiligten ebenso relevant, Reaktionen von anderen Verfahrensbeteiligten als dem gegenwärtig erfassten Sprechenden zu erfassen, wie z.B. von Zeugen und/oder Beklagten.

Daher liegt der Erfindung die Aufgabe zugrunde, ein Verfahren zur Steuerung einer Kamera eines Gerichtssaal-Mediensystems bereitzustellen, die die Nachteile des Standes der Technik überwindet. Es ist ebenfalls Aufgabe der Erfindung, ein Gerichtssaal-Mediensystem bereitzustellen, mit dem eine steuerbare Kamera steuerbar ist.

Die Aufgabe wird mittels des Verfahrens zur Steuerung einer steuerbaren Kamera gemäß Anspruch 1 gelöst. Vorteilhafte Ausführungen der Erfindung sind in den Unteransprüchen dargelegt.

Das erfindungsgemäße Verfahren zur Steuerung einer steuerbaren Kamera weist drei Verfahrensschritte auf: Im ersten Verfahrensschritt wird ein Signal empfangen. Im zweiten Verfahrensschritt wird die Position der Quelle des Signals lokalisiert. Im dritten Verfahrensschritt wird eine vordefinierte Einstellung eines der steuerbaren Parameter der steuerbaren Kamera eingestellt. Diese vordefinierte Einstellung der steuerbaren Kamera wie beispielsweise die Position der steuerbaren Kamera, also die Schwenkposition und/oder die Neigungsposition, kann beispielsweise die gesamte Bank der Zeugen, Gutachter, Staatsanwaltschaft und/oder der Angeklagten bzw. Beklagten sein. Die Einstellung der vordefinierten Einstellung kann in Abhängigkeit von der Position der Quelle des Signals erfolgen.

Das Verfahren zur Steuerung einer steuerbaren Kamera eines Gerichtssaal-Mediensystems mit vordefinierter Einstellung ermöglicht in einer vorteilhaften Ausführung das Minimieren von Fehlfunktionen, bspw. aufgrund inkorrekter Lokalisation des Audiosignals und damit verbunden die Sicherstellung der Chancengleichheit für alle Teilnehmer der Verhandlung. Im Einzelnen wird somit die sichere und fehlerfreie Gewähr des im Grundgesetz verankerten, rechtlichen Gehörs, einer Pflicht, die besonders Gerichte erfüllen müssen, gewährt. Da für die Wahrnehmung desrechtlichen Gehör dies Aussagen der streitenden Parteien nicht bloß gehört, sondern inhaltlich gewürdigt werden müssen, ist eine korrekte, vollständige und zwischen den Parteien gleichartige Wiedergabe durch das Gerichtssaal-Mediensystems im Sinne der Erfindung.

In einer Weiterbildung der Erfindung wird ein akustisches und/oder ein visuelles und/oder ein elektrisches Signal empfangen. Das akustische Signal ist vorzugsweise die menschliche Stimme, wobei die Quelle eine Person ist, deren Position lokalisiert wird. Das akustische Signal kann optional mittels Spracherkennung derart analysiert werden, dass eine Spracherkennung erfolgt, die Steuerung der steuerbaren Kamera also mittels Sprachbefehlen möglich ist. Alternativ oder zusätzlich wird ein visuelles Signal empfangen. Das visuelle Signal kann z.B. eine Handbewegung sein, wobei die Quelle eine oder mehrere Personen ist. Ebenfalls alternativ oder zusätzlich wird ein elektrisches Signal empfangen, das mittels einer elektrischen Eingabevorrichtung erzeugt wird.

In einer weiteren Ausführung der Erfindung wird das akustische Signal über ein Stereo-Mikrophon empfangen. Ein Stereo-Mikrophon weist zwei Mikrophone in einer Einhausung auf. Mittels Schalldruck-Pegeldifferenz und/oder Laufzeitdifferenz des akustischen Signals wird die Quelle des akustischen Signals lokalisiert.

In einer weiteren Gestaltung der Erfindung wird die Quelle des akustischen Signals über zwei Mikrophone lokalisiert. Zwei oder eine Mehrzahl von Mikrofonen sind in einem Mikrofonsystem zusammengefasst. Über erzeugte Schalldruck-Pegeldifferenzen und/oder Laufzeitdifferenzen wird die Quelle des akustischen Signals lokalisiert.

In einer vorteilhaften Ausbildung der Erfindung wird das visuelle Signal über eine Kamera und/oder einen Fotodetektor empfangen. Im einfachsten Fall wird mittels eines lichtempfindlichen Fotodetektors ein Helligkeitsunterschied insbesondere im Spektralbereich des sichtbaren Lichts detektiert. Der Helligkeitsunterschied kann z.B. durch eine Handbewegung verursacht werden. Die Kamera zum Empfang des visuellen Signals ist bevorzugt unterschiedlich zu der steuerbaren Kamera und bevorzugt an einer unterschiedlichen Position zur steuerbaren Kamera angeordnet, um ein visuelles Signal von an einer Mehrzahl an unterschiedlichen Positionen angeordneten Quellen zu empfangen.

In einer Weiterbildung der Erfindung wird die Quelle des visuellen Signals aus den von der Kamera und/oder dem Fotodetektor empfangenen Signal lokalisiert. Die Kamera und/oder der Fotodetektor ist vorzugsweise an einer Position angeordnet, in der alle am Prozess beteiligten Personen mittels der Kamera und/oder des Fotodetektors erfasst werden. Möglich ist auch die Verwendung einer Mehrzahl von Kameras und/oder Fotodetektoren, die einen oder mehrere Bereiche des Gerichtssaales erfasst. Insbesondere kann die Kamera und/oder der Fotodetektor in einem Endgerät (z.B. Laptop, Smartphone) angeordnet sein, das einer Prozesspartei zur Verfügung steht. Das visuelle Signal wird dann von einer Mehrzahl oder allen Prozessparteien empfangen und lokalisiert werden.

In einer weiteren Ausgestaltung der Erfindung wird das elektrische Signal über ein Eingabegerät empfangen. Das Eingabegerät ist bevorzugt ein Endgerät, z.B. ein Laptop, Smartphone, Tablet, mittels dem eine oder eine Mehrzahl von Prozessparteien ein elektrisches Signal erzeugen kann.

In einer Weiterbildung der Erfindung wird das elektrische Signal über die Position eines Eingabegerätes lokalisiert. Das Eingabegerät ist bevorzugt ein Endgerät, z.B. ein Laptop, Smartphone, Tablet, wobei eine Mehrzahl von Prozessbeteiligten über jeweils ein Endgerät verfügt. Die Lokalisierung des Signals erfolgt durch Ermittlung der Position des Endgerätes.

In einer weiteren Ausführung der Erfindung umfasst die vordefinierte Einstellung eine Zoom-Einstellung. Mittels der Zoom-Einstellung kann der Bildausschnitt des Kamerabildes z.B. derart eingestellt werden, dass unterschiedliche Bereiche des Gerichtssaales im Kamerabild gleich groß dargestellt werden.

In einer weiteren Ausbildung der Erfindung wird die Zoom-Einstellung derart gewählt, dass mehrere Personen im Kamerabild erfasst werden. In einer optionalen Ausführungsform wird die Zoom-Einstellung derart gewählt, dass mehrere Personen einer Prozesspartei im Kamerabild erfasst werden. Damit wird gewährleistet, dass auch der Ausschnitt des Kamerabildes groß genug bleibt, um alle Verfahrensbeteiligten einer Prozesspartei im Bild festzuhalten.

In einer Weiterbildung der Erfindung wird die im Erfassungsbereich der Kamera befindliche Person ermittelt. Die Zoom-Einstellung wird derart gewählt, dass das Kamerabild auf die im Erfassungsbereich der Kamera ermittelten Personen im Kamerabild gezoomt wird. Die Ermittlung erfolgt über die Position der im Erfassungsbereich der Kamera befindliche Person. Der Zoom wird so eingestellt, dass insbesondere Gestik und Mimik der Person erfasst und aufgezeichnet werden kann.

In einer weiteren Ausgestaltung der Erfindung umfasst die vordefinierte Einstellung eine vordefinierte Position, auf die das Kamerabild zentriert wird. Eine vordefinierte Position umfasst z.B. einen Schwenk- und Neigungswinkel sowie den Zoom der steuerbaren Kamera. Damit wird gewährleistet, dass auch der Ausschnitt des Kamerabildes groß genug bleibt, um alle Verfahrensbeteiligten einer Prozesspartei im Bild der steuerbaren Kamera zu erfassen.

In einer weiteren Gestaltung der Erfindung ist die vordefinierte Position eine andere Position als die lokalisierte Quelle des empfangenen Signals. Dies ist beispielsweise dann vorteilhaft, wenn die Reaktion eines Angeklagten auf die Aussage eines Zeugen oder die Reaktion eines Zeugen auf eine Frage des Richters, Klägers oder des Beklagten erfasst werden soll.

In einer vorteilhaften Weiterbildung umfasst das von der Kamera in der vordefinierten Position erfasste Bild die lokalisierte Position der Quelle des empfangenen Signals. Diese vordefinierte Voreinstellung der Kamera wie beispielsweise die Position der Kamera, also die Schwenkposition und/oder die Neigungsposition, kann beispielsweise die gesamte Bank der Kläger bzw. Staatsanwaltschaft und/oder der Angeklagten bzw. Beklagten sein.

In einer weiteren Ausführung der Erfindung wird eine vordefinierte Einstellung eines der steuerbaren Parameter der steuerbaren Kamera eingerichtet. Die steuerbaren Parameter der steuerbaren Kamera umfassen z.B. den Schwenk- und Neigungswinkel sowie den Zoom der steuerbaren Kamera. Die steuerbare Kamera wird mittels Einstellung eines oder mehrerer der steuerbaren Parameter derart ausgerichtet, dass beispielsweise die gesamte Bank der Kläger bzw. Staatsanwaltschaft und/oder der Angeklagten bzw. Beklagten erfasst wird.

In einer Weiterbildung der Erfindung werden mehrere vordefinierte Einstellungen der steuerbaren Parameter der steuerbaren Kamera eingerichtet. Die steuerbaren Parameter der steuerbaren Kamera umfassen z.B. den Schwenk- und Neigungswinkel sowie den Zoom der steuerbaren Kamera. Die steuerbare Kamera wird mittels Einstellung mehrerer der steuerbaren Parameter derart ausgerichtet, dass beispielsweise die gesamte Bank der Kläger bzw. Staatsanwaltschaft und/oder der Angeklagten bzw. Beklagten erfasst wird.

In einem weiteren Aspekt der Erfindung umfassen die vordefinierten Einstellungen mehrere unterschiedliche Positionen. Dies beinhaltet beispielsweise die Schwenkung, die Neigung und/oder den Zoom.

In einer weitere erfindungsgemäßen Gestaltungsform wird die steuerbare Kamera durch ein Control-Panel gesteuert. Das Control-Panel ist hierbei im Gerichtssaal selbst angeordnet. Hierdurch wird gewährleistet, dass die volle Kontrolle des Gerichtssaal-Mediensystems beim Vorsitzenden Richter oder einer von ihm bevollmächtigten Person liegt.

Die Aufgabe wird weiterhin mittels des Gerichtssaal-Mediensystem mit einem Signalempfänger, einer steuerbaren Kamera, einer Steuereinheit und einem Speicher gelöst. Vorteilhafte Ausführungen der Erfindung sind ebenfalls in den Unteransprüchen dargelegt. Außerdem können Positionen von lokalisierten Signalen niemals angefahren werden. Dies kann zu Beispiel der Fall sein, wenn lediglich eine Audiomitschnitt über einen Lautsprecher im Gerichtssaal eingespielt wird

Das erfindungsgemäße Gerichtssaal-Mediensystem weist einen Signalempfänger, eine steuerbare Kamera, eine Steuereinheit und einen Speicher auf. Erfindungsgemäß ist über den Signalempfänger ein Signal empfangbar und die Position des Signals lokalisierbar. Auf der Steuereinheit ist ein Softwareprogramm ausführbar, durch das die steuerbare Kamera in eine im Speicher abgelegte vordefinierte Einstellung einstellbar ist. Der Speicher weist die Daten zur Installation und/oder Konfiguration auf. Gleichzeitig können auf der Steuereinheit Daten zur Installation und/oder Konfiguration gespeichert sein, mit denen eine Mehrzahl von unterschiedlichen vordefinierten Einstellungen der steuerbaren Kamera einstellbar ist.

In einer Weiterbildung der Erfindung ist der Signalempfänger geeignet, ein akustisches, ein elektrisches und/oder ein visuelles Signal zu empfangen. Weiterhin ist das Gerichtssaal-Mediensystem dafür geeignet, das empfangene Signal zu lokalisieren. Das akustische Signal ist vorzugsweise die menschliche Stimme, wobei die Quelle eine Person ist, deren Position lokalisiert wird. Das akustische Signal kann optional mittels Spracherkennung derart analysiert werden, dass eine Spracherkennung erfolgt, die Steuerung der steuerbaren Kamera also mittels Sprachbefehlen möglich ist. Alternativ oder zusätzlich wird ein visuelles Signal empfangen. Das visuelle Signal kann z.B. eine Handbewegung sein, wobei die Quelle eine oder mehrere Personen ist. Ebenfalls alternativ oder zusätzlich wird ein elektrisches Signal empfangen, das mittels einer elektrischen Eingabevorrichtung erzeugt wird.

In einer weiteren Ausführung der Erfindung ist der Signalempfänger ein Mikrophon, ein Eingabegerät, ein Fotodetektor und/oder eine Kamera. Zwei oder eine Mehrzahl von Mikrophonen sind in einem Mikrophonsystem zusammengefasst. Über erzeugte Pegeldifferenz und/oder Laufzeitdifferenz wird die Quelle des akustischen Signals lokalisiert. Mittels eines lichtempfindlichen Fotodetektors wird ein Helligkeitsunterschied insbesondere im Spektralbereich des sichtbaren Lichts detektiert. Der Helligkeitsunterschied kann z.B. durch eine Handbewegung verursacht werden. Die Kamera zum Empfang des visuellen Signals ist bevorzugt unterschiedlich zu der steuerbaren Kamera und bevorzugt an einer unterschiedlichen Position zur steuerbaren Kamera angeordnet, um ein visuelles Signal von an einer Mehrzahl an unterschiedlichen Positionen angeordneten Quellen zu empfangen.

In einer weiteren Gestaltung der Erfindung ist an die zentrale Steuereinheit ein Control-Panel angeschlossen. Das Control-Panel ist dafür vorgesehen und dafür geeignet, die Ausgabe von Inhalten auf den Ausgabeeinrichtungen zu steuern. Das Control-Panel ist die zentrale Kontroll- bzw. Steuerungskomponente für die Steuerung der erfindungsgemäßen Gerichtssaal-Mediensystemsteuerung. Es wird von dem Vorsitzenden oder einer dafür bestimmten Person bedient. Das Control-Panel wird am Platz des Vorsitzenden angeordnet, kann aber an den Arbeitsplatz einer beauftragten Person weitergeleitet werden

Das Gerichtssaal-Mediensystem kann so optional als geschlossenes System betrieben werden, sodass während einer Gerichtsverhandlung kein Zugriff von Extern beispielsweise durch Dritte möglich ist. Der Richter hat somit die volle Kontrolle über alle Geschehnisse des Gerichtssaalmediensystems. In einer optionalen Ausgestaltung der Erfindung sind alle Elemente zur Steuerung des Gerichtssaal-Mediensystems im Gerichtssaal angeordnet. In einer weiteren optionalen Ausführungsform ist die Steuerung des Gerichtssaalmediensystems während einer Gerichtsverhandlung auf im Gerichtssaal befindliche Steuerungselemente, wie beispielsweise das Control-Panel, begrenzt.

Gerichtssaal-Mediensysteme unterliegen hierbei besonderen Anforderungen. Zum einem muss gewährleistet sein, dass Gerichtssaal-Mediensysteme nicht von außen durch Dritte korrumpiert werden können. Hierfür ist es in einer optionalen Ausgestaltung der Erfindung vorgesehen, dass das Gerichtssaal-Mediensystem als geschlossenes System betrieben wird. In einer besonders bevorzugten Ausführungsform wird das Gerichtssaal-Mediensystem während eines Gerichtsverfahrens als geschlossenes System betrieben. Zum anderen muss das Gerichtssaal-Mediensystem darauf ausgelegt ein, dass den Verfahrensbeteiligten ihr beispielsweise im deutschen Grundgesetz verankertes Recht auf rechtliches Gehör gewährleistet werden kann - allerdings nur insoweit, wie dies der Vorsitzende Richter zulässt, damit beispielsweise die Gerichtsverhandlung selbst nicht als Podium missbraucht werden kann. Andernfalls könnte dem Gericht selbst Verfahrensfehler angelastet werden, oder nicht genehmigte Inhalte eingebracht und dargestellt werden.

Ausführungsbeispiele des erfindungsgemäßen Gerichtssaal-Mediensystems und des erfindungsgemäßen Verfahrens zur Steuerung einer steuerbaren Kamera sind in den Zeichnungen schematisch vereinfacht dargestellt und werden in der nachfolgenden Beschreibung näher erläutert.

Es zeigen:

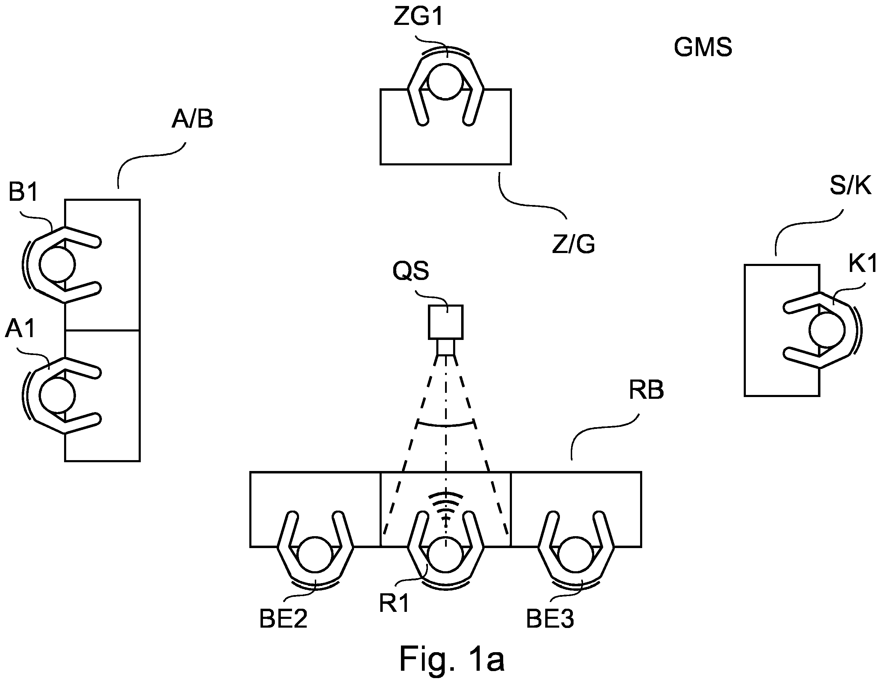

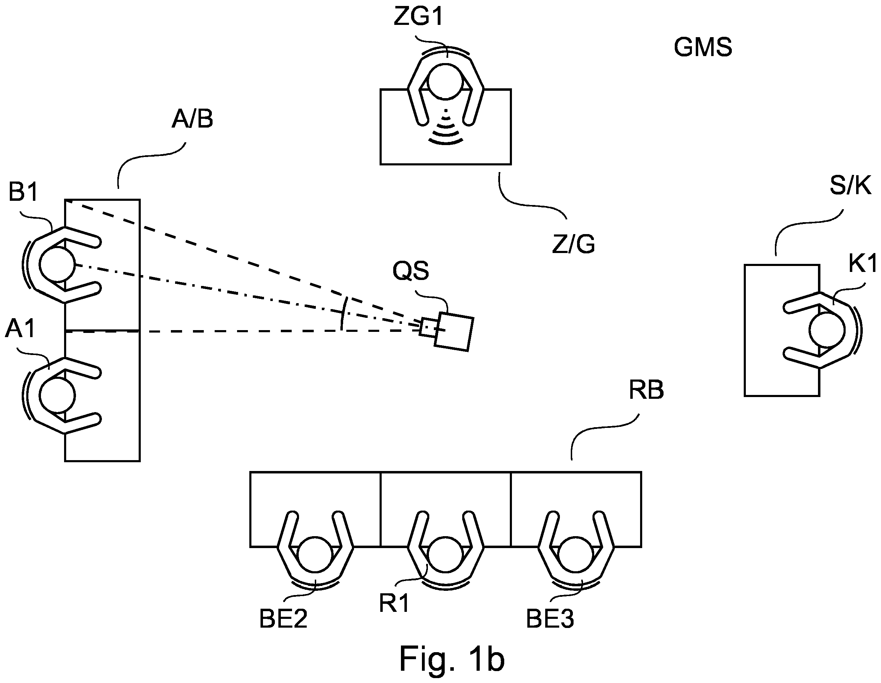

- Fig. 1 a:: Gerichtssaal-Mediensystem mit steuerbarer Kamera ausgerichtet auf Sprecher
- Fig. 1 b:: Gerichtssaal-Mediensystem mit steuerbarer Kamera ausgerichtet auf den nicht sprechenden Beklagten
- Fig. 2 a:: Gerichtssaal-Mediensystem mit steuerbarer Kamera ausgerichtet auf den aussagenden Zeugen

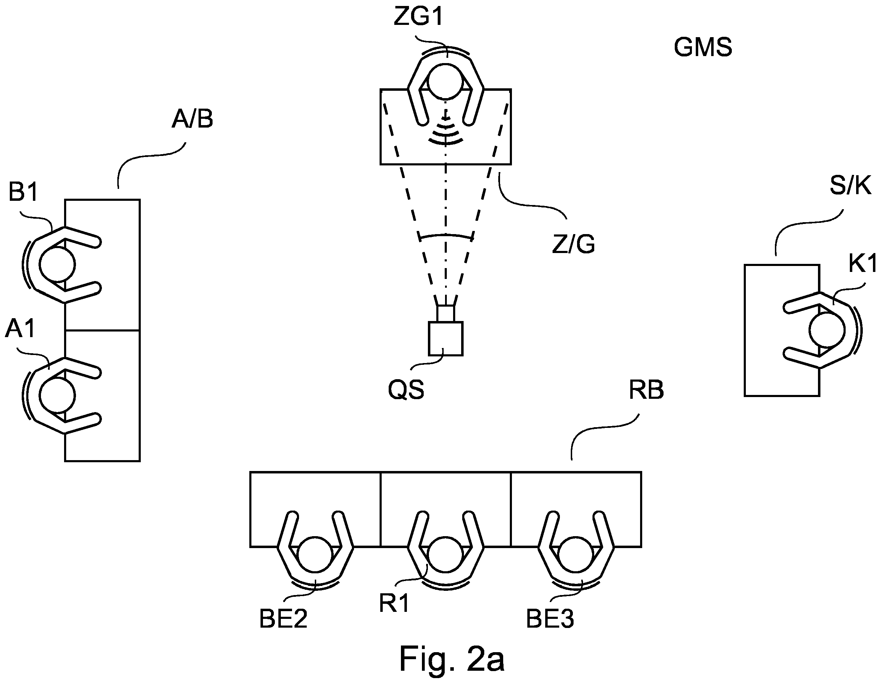

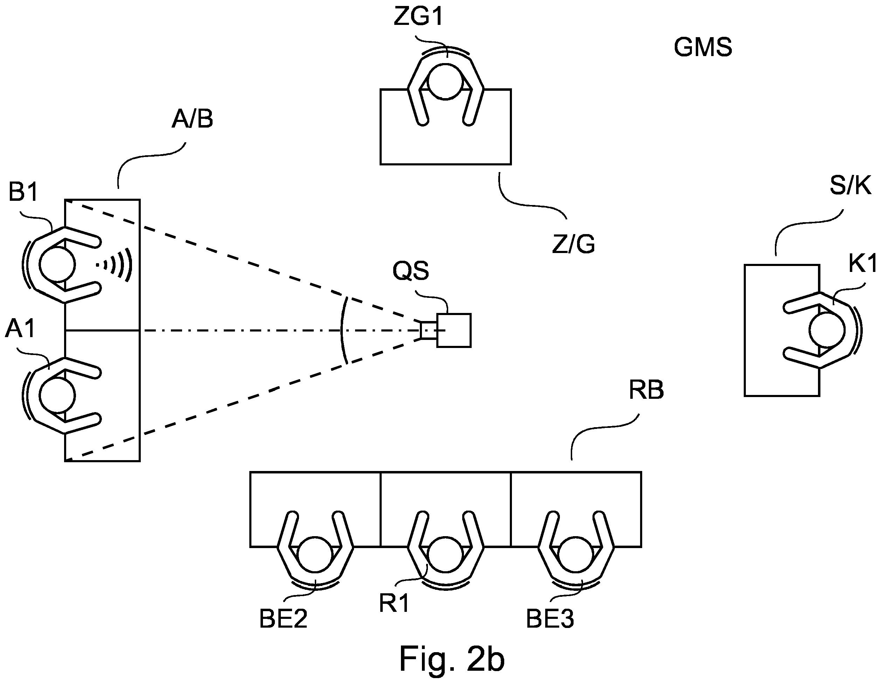

- Fig. 2 b:: Gerichtssaal-Mediensystem mit steuerbarer Kamera ausgerichtet auf einen Punkt neben dem Sprecher

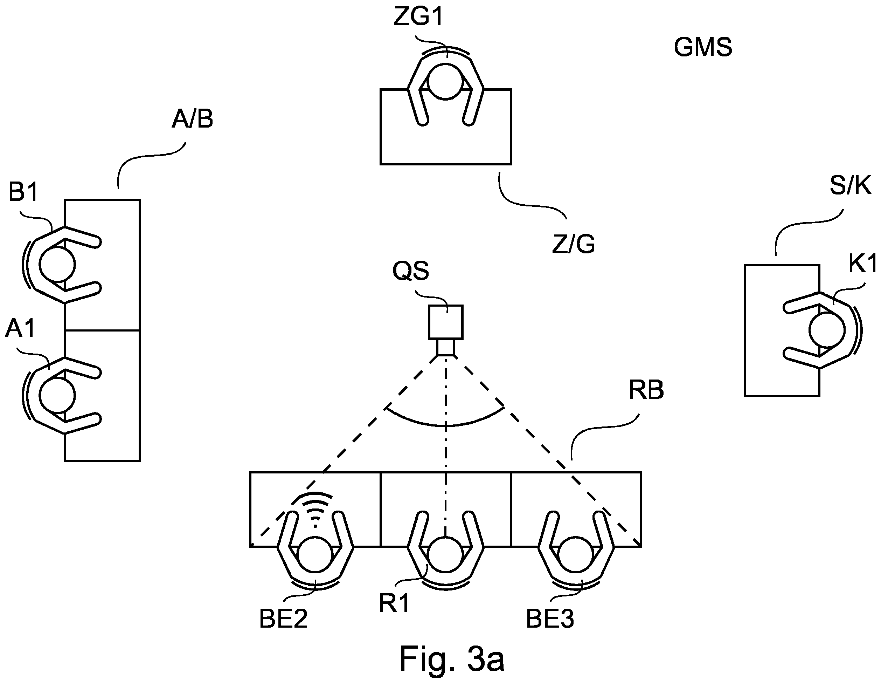

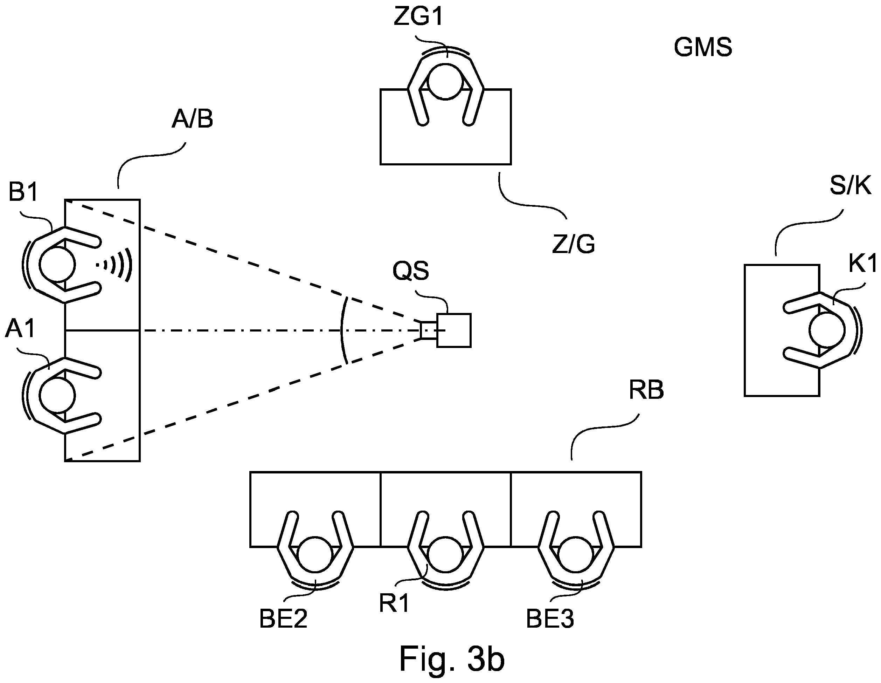

- Fig. 3 a:: Gerichtssaal-Mediensystem mit steuerbare Kamera, die alle Personen der Richterbank erfasst
- Fig. 3 b:: Gerichtssaal-Mediensystem mit steuerbarer Kamera, die Personen des Bereichs der Verteidigung erfasst

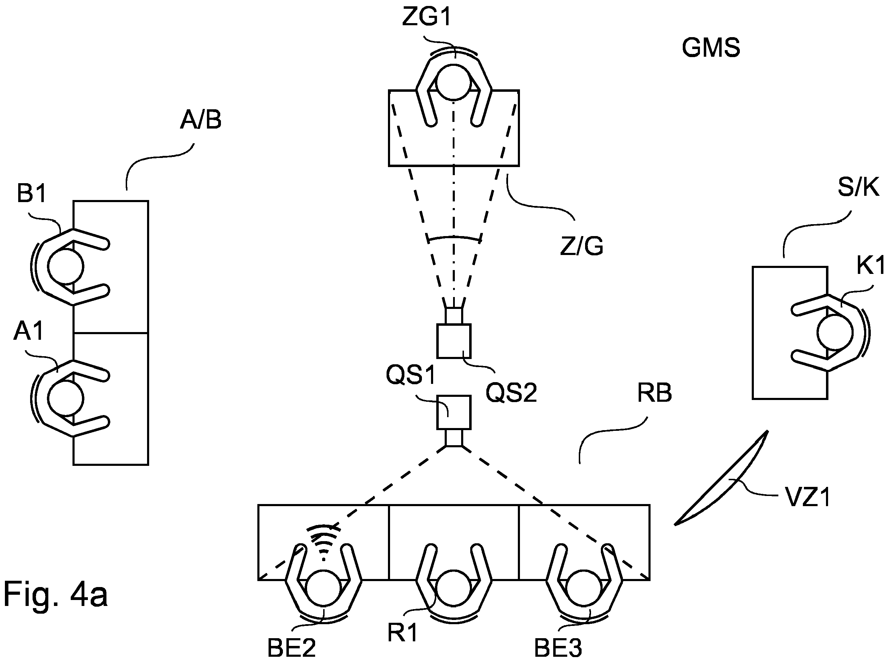

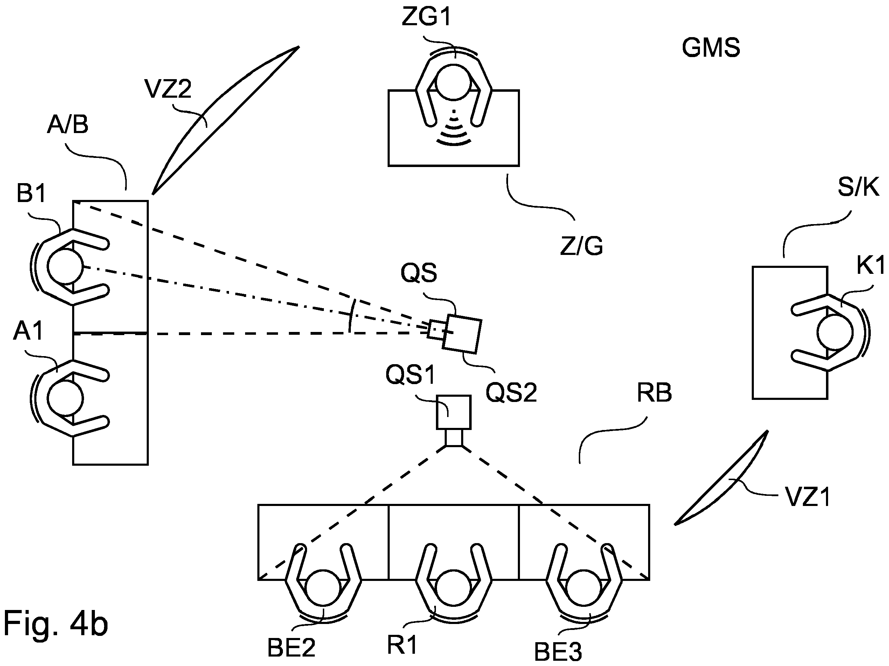

- Fig. 4 a:: Gerichtssaal-Mediensystems mit einer steuerbarer und einer nichtsteuerbaren Kamera, erste Ansicht
- Fig. 4 b:: Gerichtssaal- Mediensystems mit einer steuerbarer und einer nichtsteuerbaren Kamera, zweite Ansicht

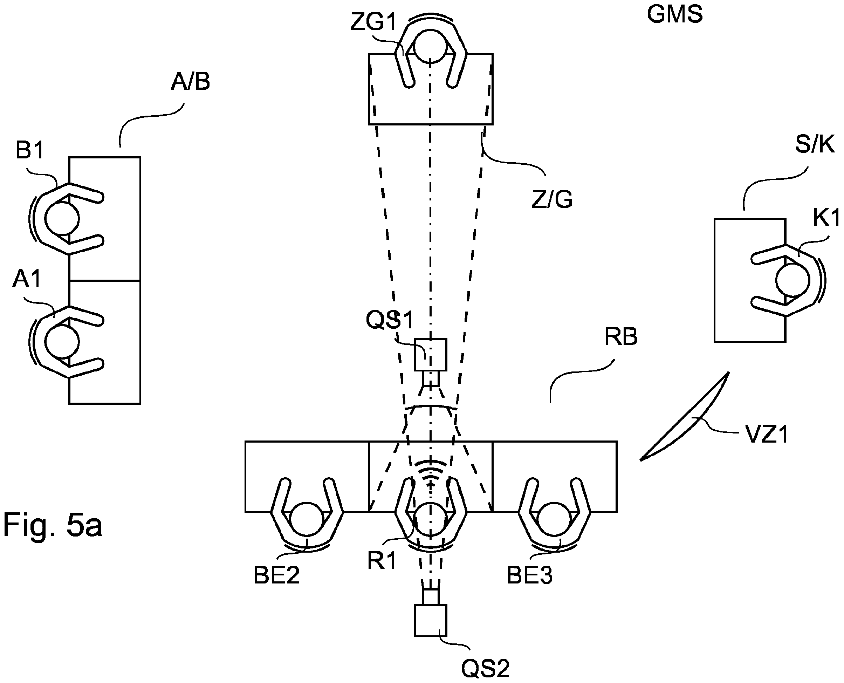

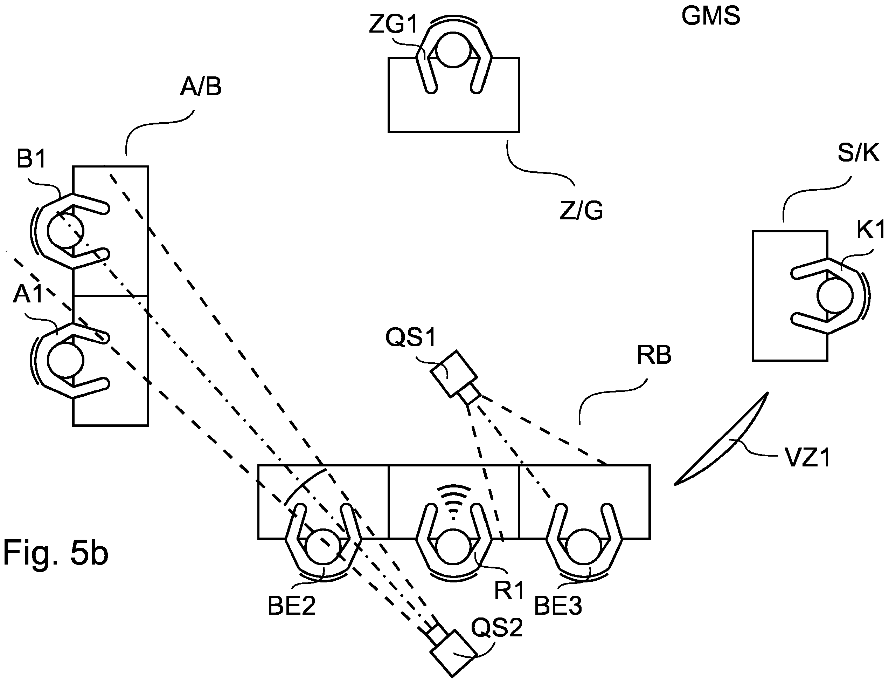

- Fig. 5 a:: Gerichtssaal-Mediensystems mit zwei steuerbaren Kameras, erste Ansicht
- Fig. 5 b:: Gerichtssaal- Mediensystems mit zwei steuerbaren Kameras, zweite Ansicht

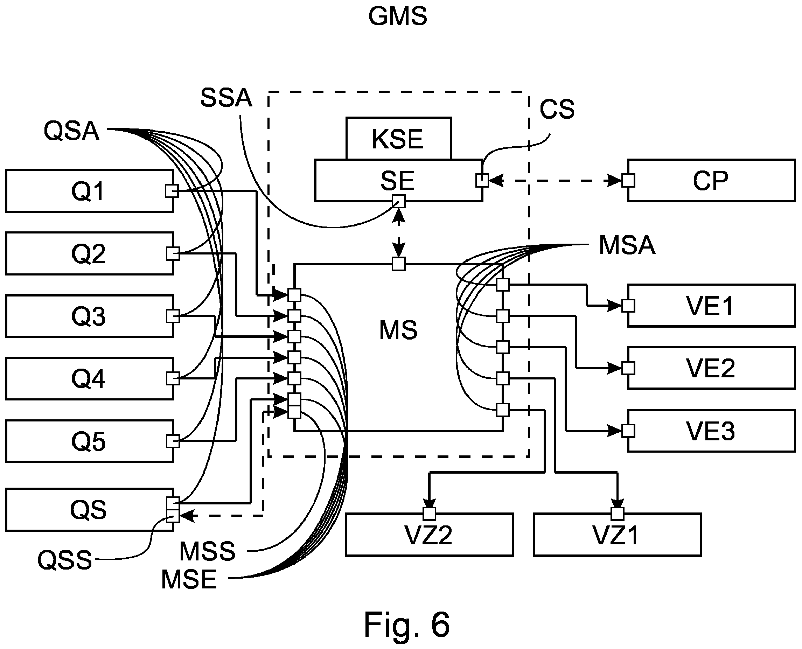

- Fig. 6:: Schaltplan der Hardware des Gerichtssaal-Mediensystems

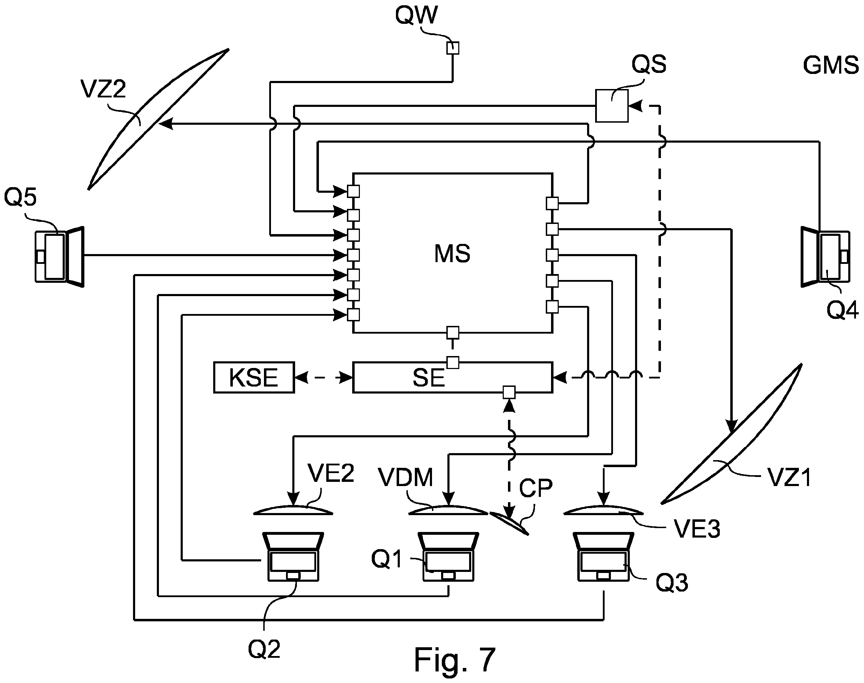

- Fig. 7:: Alternaive Verschaltung der Hardware eines Gerichtssaal-Mediensystems

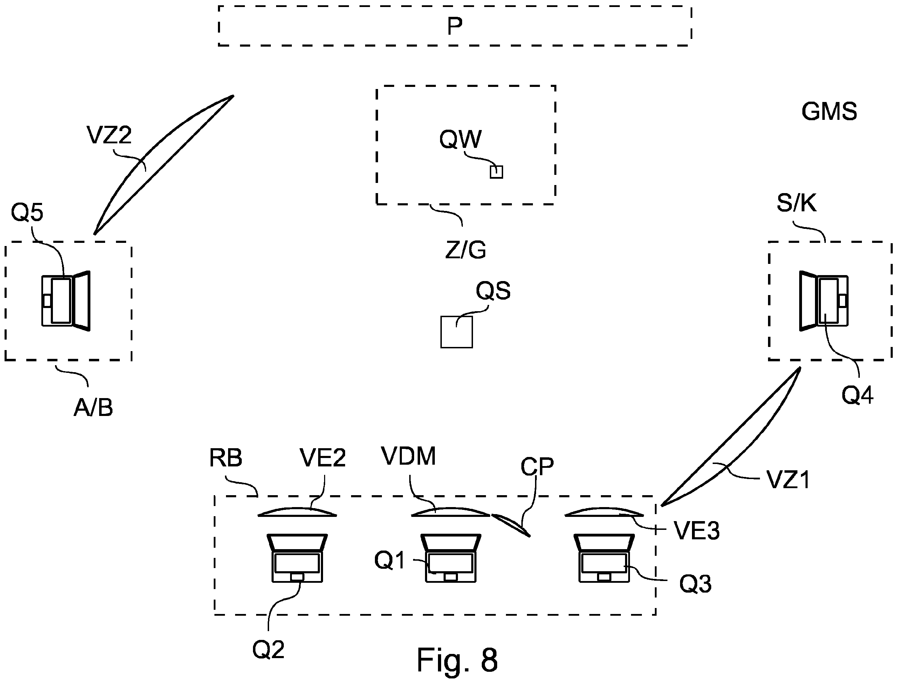

- Fig. 8:: Quellen und Ausgabeeinrichtungen eines Gerichtssaal-Mediensystems

Fig. 1 zeigt eine schematische Draufsicht eines Ausführungsbeispiels des erfindungsgemäßen Gerichtssaal-Mediensystems GMS in einem Gerichtssaal. Der Gerichtssaal weist eine Richterbank RB mit jeweils einem Platz für den Vorsitzenden Richter R1 und zwei Beisitzenden Richtern BE2, BE3, einen Bereich Z/G für Zeugen bzw. Gutachter ZG1, einen Bereich für die Prozessparteien, Verteidigung A/B mit Beklagtem B1 und dessen Rechtsvertreter A1 sowie Klage S/K mit dem Kläger K1 auf. Das Gerichtssaal-Mediensystem GMS weist zudem eine steuerbare Kamera QS auf, die in diesem Ausführungsbeispiel im Wesentlichen zentral im Gerichtssaal angeordnet ist.

Die Steuerung der steuerbaren Kamera QS erfolgt in diesem Ausführungsbeispiel mittels eines akustischen Signals. Zur Steuerung der steuerbaren Kamera QS wird zunächst ein Signal empfangen. Das Signal ist in diesem Ausführungsbeispiel ein akustisches Signal, das über ein Mikrophon empfangen wird. Das akustische Signal wird vorteilhafterweise von einem Stereo-Mikrophon empfangen, möglich ist auch der Empfang des akustischen Signals von einer Mehrzahl von Mikrophonen, die vorzugsweise an voneinander entfernten Positionen im Gerichtssaal angeordnet sind. Aufgrund der Pegeldifferenz der einzelnen Mikrophone ist eine Lokalisierung der Position einer Signalquelle möglich. Im einfachsten Fall weist jeder der Bereiche RB, Z/G, A/B, S/K ein Mikrophon als Signalempfänger für jede in dem jeweiligen Bereich angeordnete Person R1, BE2, BE3, ZG1, A1, B1 auf. Damit wird die Lokalisierung der Quelle des akustischen Signals vereinfacht.

Zu einem ersten Zeitpunkt, z.B. zu Beginn einer Gerichtsverhandlung, ist die steuerbare Kamera QS derart auf eine vordefinierte Einstellung eingestellt, dass die steuerbare Kamera QS auf die vordefinierte Position des Vorsitzenden Richters R1 eingestellt ist (Fig. 1 a). Die Einstellung ist derart vordefiniert, dass Mimik und Gestik des Vorsitzenden Richters R1 in dem Kamerabild der steuerbaren Kamera QS erfasst wird, m.a.W. Gesicht und Hände des Vorsitzenden Richters R1 und insbesondere dessen Oberkörper erfasst werden.

Die steuerbare Kamera QS ist in diesem Ausführungsbeispiel zu dem ersten Zeitpunkt auf eine erste vordefinierte Einstellung derart ausgerichtet, dass die steuerbare Kamera QS den Vorsitzenden Richter R1 erfasst.

Zu einem zweiten Zeitpunkt ist die steuerbare Kamera QS auf eine weitere vordefinierte Einstellung derart eingestellt, dass die steuerbare Kamera QS auf die vordefinierte Position des Beklagten B1 zentriert ist (Fig. 1 b) und im Kamerabild der steuerbaren Kamera QS die Position des Beklagten B1 und der Beklagte B1 selbst erfasst wird. Die steuerbare Kamera QS dokumentiert so z.B. gestische und mimische Reaktionen des Beklagten B1 auf die Aussagen des Zeugen/Gutachters ZG1. Das Signal zur Steuerung der steuerbaren Kamera QS ist in diesem Ausführungsbeispiel die Position der Stimme des Zeugen/Gutachters ZG1, die von den Mikrophonen des Gerichtssaal-Mediensystems GMS an einer anderen Position lokalisiert wird als die vordefinierte Position, auf die die steuerbare Kamera QS eingestellt wird, in diesem Ausführungsbeispiel die Position des Beklagten B1. Die zu diesem zweiten Zeitpunkt vordefinierte Position der vordefinierten Einstellung der steuerbaren Kamera QS unterscheidet sich also von der lokalisierten Position der Quelle des akustischen Signals.

Das Gerichtssaal-Mediensystem GMS lokalisiert die Stimme des Zeugen/Gutachters ZG1 mittels eines Stereo-Mikrophons und/oder einer Mehrzahl von Mikrophonen.

Die Zoom-Einstellung der steuerbaren Kamera QS ist derart gewählt, dass der Bildausschnitt in beiden vordefinierten Einstellungen jeweils gleich ist. Der Bildausschnitt zeigt in voller Breite jeweils den Tisch, an dem der Vorsitzende Richter R1 bzw. der Beklagte B1 angeordnet ist. Die jeweils im Fokus der steuerbaren Kamera QS befindliche Person R1, B1 ist daher in beiden vordefinierten Einstellungen mit dem gleichen Bildausschnitt dargestellt, erscheinen also im von der steuerbaren Kamera QS erfassten Bild gleich groß. Nicht nur die Schwenkung und Neigung der steuerbaren Kamera QS sind vordefiniert, sondern auch die Einstellung des Zooms. So wird gewährleistet, dass auch der Ausschnitt des Kamerabildes groß genug bleibt, um alle Verfahrensbeteiligten einer Prozesspartei im Bild festzuhalten.

Wenn zu einem weiteren Zeitpunkt ein akustisches Signal erfasst wird, dessen Position an der Richterbank RB am Platz des Vorsitzenden Richters R1 lokalisiert ist, wird die steuerbare Kamera QS wieder auf die vordefinierte Einstellung des Vorsitzenden Richters R1 eingestellt (Fig. 1 a). Schwenkwinkel, Neigungswinkel und Zoom-Einstellung der steuerbaren Kamera QS sind derart vordefiniert eingestellt, dass Gesicht, Hände und Oberkörper des Vorsitzenden Richters R1 erfasst werden.

Die steuerbare Kamera QS weist in diesem Ausführungsbeispiel zwei unterschiedliche vordefinierte Einstellungen von steuerbaren Parametern (Schwenkwinkel, Neigungswinkel und Zoom-Einstellung) auf. Es ist ebenfalls möglich, dass eine steuerbare Kamera QS eine größere Anzahl (mehr als zwei) unterschiedlicher vordefinierter Einstellungen aufweist, die mittels akustischer, visueller oder elektrischer Signale eingestellt werden können. Damit können unterschiedliche Bereiche des Gerichtssaales im Kamerabild der steuerbaren Kamera QS erfasst und dokumentiert werden.

Ein weiteres Ausführungsbeispiel des erfindungsgemäßen Gerichtssaal-Mediensystems GMS zeigt Fig. 2. In diesem Ausführungsbeispiel weist die steuerbare Kamera QS ebenfalls zwei unterschiedliche vordefinierte Einstellungen von steuerbaren Parametern, insbesondere Schwenkwinkel, Neigungswinkel und Zoom-Einstellung, auf. In der ersten vordefinierten Einstellung ist die steuerbare Kamera QS auf die Position des Zeugen/Gutachters ZG1 eingestellt (Fig. 2 a), in der zweiten vordefinierten Einstellung ist die steuerbare Kamera QS auf den Bereich der Verteidigung A/B eingestellt (Fig. 2 b).

Die Steuerung der zentral angeordneten steuerbaren Kamera QS erfolgt in diesem Ausführungsbeispiel ebenfalls mittels akustischer Signale. Das erste akustische Signal ist die Stimme des Zeugen/Gutachters ZG1, die von Mikrophonen des Gerichtssaal-Mediensystems GMS lokalisiert wird. Die steuerbare Kamera QS wird bei Empfang dieses akustischen Signals auf die erste vordefinierte Einstellung derart eingestellt, dass die steuerbare Kamera QS den Zeugen/Gutachter ZG1 erfasst (Fig. 2 a) und insbesondere dessen Gestik und Mimik aufzeichnet und dokumentiert. Dadurch sind z.B. Rückschlüsse auf die Glaubwürdigkeit eines Zeugen ZG1 möglich.

Ein weiteres akustisches Signal ist die Stimme des Beklagten B1, die ebenfalls von den Mikrophonen des Gerichtssaal-Mediensystems GMS lokalisiert wird. Die steuerbare Kamera QS wird bei Empfang dieses zweiten akustischen Signals auf die zweite vordefinierte Einstellung derart eingestellt, dass die steuerbare Kamera QS den Bereich der Verteidigung A/B erfasst (Fig. 2 b) und Gestik und Mimik von sowohl Verteidiger A1 als auch Beklagtem B1 gleichzeitig aufzeichnet.

In einer weiteren optionalen Ausführung des Gerichtssaal-Mediensystems GMS ist ein weiteres akustisches Signal die Stimme des Verteidigers A1, die durch die Mikrophone des Gerichtssaal-Mediensystems GMS lokalisiert wird. Die steuerbare Kamera QS wird bei Empfang dieses weiteren akustischen Signals auf die zweite vordefinierte Einstellung derart eingestellt, dass die steuerbare Kamera QS ebenfalls den Bereich der Verteidigung A/B erfasst (Fig. 2 b) und Gestik und Mimik von sowohl Verteidiger A1 als auch Beklagtem B1 gleichzeitig aufzeichnet.

Fig. 3 zeigt ein weiteres Ausführungsbeispiel des erfindungsgemäßen Gerichtssaal-Mediensystems GMS. Die steuerbare Kamera QS weist in diesem Ausführungsbeispiel wiederum zwei unterschiedliche vordefinierte Einstellungen von steuerbaren Parametern (Schwenkwinkel, Neigungswinkel und Zoom-Einstellung) auf. In der ersten vordefinierten Einstellung ist die steuerbare Kamera QS auf den Bereich der Richterbank RB eingestellt (Fig. 3 a), in der zweiten vordefinierten Einstellung ist die steuerbare Kamera QS auf den Bereich der Verteidigung A/B eingestellt (Fig. 3 b).

Das erste akustische Signal wird in diesem Ausführungsbeispiel durch die Stimme eines und/oder die Stimmen mehrerer der an der Richterbank angeordneten Richter R1, BE2, BE3 erzeugt. Jede der Stimmen der an der Richterbank angeordneten Richter R1, BE2, BE3 generiert also das erste akustische Signal, das von den Mikrophonen des Gerichtssaal-Mediensystems GMS lokalisiert wird. Die steuerbare Kamera QS wird bei Empfang dieses ersten akustischen Signals auf die erste vordefinierte Einstellung derart eingestellt, dass die steuerbare Kamera QS den Bereich der Richterbank RB erfasst (Fig. 3 a) und aufzeichnet.

Ein weiteres akustisches Signal ist die Stimme des Beklagten B1, die ebenfalls von den Mikrophonen des Gerichtssaal-Mediensystems GMS lokalisiert wird. Die steuerbare Kamera QS wird bei Empfang dieses zweiten akustischen Signals analog dem vorherigen Ausführungsbeispiel (s. Fig. 2 b) auf die zweite vordefinierte Einstellung derart eingestellt, dass die steuerbare Kamera QS den Bereich der Verteidigung A/B erfasst (Fig. 3 b) und Gestik und Mimik von sowohl Verteidiger A1 als auch Beklagtem B1 gleichzeitig aufzeichnet.

Ebenfalls in Analogie zum vorherigen Ausführungsbeispiel (s. Fig. 2) ist ein weiteres akustisches Signal die Stimme des Verteidigers A1, die durch die Mikrophone des Gerichtssaal-Mediensystems GMS lokalisiert wird. Jede der Stimmen der in dem Bereich für Verteidigung A/B angeordneten Personen A1, B1 generiert also ein zweites akustisches Signal, das von den Mikrophonen des Gerichtssaal-Mediensystems GMS lokalisiert wird. Die steuerbare Kamera QS wird bei Empfang dieses weiteren akustischen Signals auf die zweite vordefinierte Einstellung derart eingestellt, dass die steuerbare Kamera QS ebenfalls den Bereich der Verteidigung A/B erfasst (Fig. 3 b) und Gestik und Mimik von sowohl Verteidiger A1 als auch Beklagtem B1 gleichzeitig aufzeichnet.

Ein weiteres Ausführungsbeispiel des erfindungsgemäßen Gerichtssaal-Mediensystems GMS zeigt Fig. 4. In diesem Ausführungsbeispiel weist das Gerichtssaal-Mediensystem GMS zwei steuerbare Kameras QS1, QS2 auf. Die beiden steuerbaren Kameras QS1, QS2 sind an unterschiedlichen Positionen im Gerichtssaal angeordnet und jeweils unabhängig voneinander steuerbar. Das Gerichtssaal-Mediensystem GMS weist außerdem zwei zweite Ausgabe-Einrichtungen VZ1, VZ2 auf.

Die erste steuerbare Kamera QS1 weist in diesem Ausführungsbeispiel nur eine vordefinierte Einstellung der steuerbaren Parameter auf. In dieser vordefinierten Einstellung ist die erste steuerbare Kamera QS1 permanent auf den Bereich der Richterbank RB eingestellt, die erste steuerbare Kamera QS1 zeichnet daher permanent ein Bild des Bereichs der Richterbank RB und der darin angeordneten Personen R1, BE2, BE3 auf. Dieses Kamerabild wird auf einer und/oder beiden zweiten Ausgabe-Einrichtungen VZ1, VZ2 ausgegeben. Alternativ kann natürlich die erste Kamera auch nicht-steuerbar ausgeführt sein und permanent auf den Angeklagten und/oder den Zeugen ausgerichtet sein.

Die zweite steuerbare Kamera QS2 weist dagegen zwei unterschiedliche vordefinierte Einstellungen auf: In der ersten vordefinierten Einstellung ist die zweite steuerbare Kamera QS2 auf den Bereich für Zeugen und Gutachter Z/G eingestellt (Fig. 4 a), in der zweiten vordefinierten Einstellung ist die zweite steuerbare Kamera QS2 auf den Bereich der Verteidigung A/B derart ausgerichtet, dass die zweite steuerbare Kamera QS2 auf die vordefinierte Position des Beklagten B1 zentriert ist (Fig. 4 b) und im Kamerabild der zweiten steuerbaren Kamera QS2 die Position des Beklagten B1 und der Beklagte B1 selbst erfasst wird. Das in beiden unterschiedlichen vordefinierten Einstellungen erfasste Kamerabild der zweiten steuerbaren Kamera QS2 wird ebenfalls auf einer und/oder beiden zweiten Ausgabe-Einrichtungen VZ1, VZ2 ausgegeben.

Die Steuerung der zweiten steuerbaren Kamera QS2 erfolgt wiederum mittels akustischer Signale. Das erste akustische Signal wird, wie im vorhergehenden Ausführungsbeispiel (s. Fig. 3), durch die Stimme eines und/oder die Stimmen mehrerer der an der Richterbank angeordneten Richter R1, BE2, BE3 erzeugt. Jede der Stimmen der an der Richterbank angeordneten Richter R1, BE2, BE3 generiert also das erste akustische Signal, das von den Mikrophonen des Gerichtssaal-Mediensystems GMS lokalisiert wird. Die zweite steuerbare Kamera QS2 wird bei Empfang dieses ersten akustischen Signals auf die erste vordefinierte Einstellung derart eingestellt, dass die zweite steuerbare Kamera QS2 den Bereich für Zeugen und Gutachter Z/G erfasst (Fig. 4 a) und aufzeichnet.

Ein weiteres akustisches Signal ist die Stimme des Beklagten B1, die ebenfalls von den Mikrophonen des Gerichtssaal-Mediensystems GMS lokalisiert wird. Die zweite steuerbare Kamera QS2 wird bei Empfang dieses zweiten akustischen Signals auf die zweite vordefinierte Einstellung derart eingestellt, dass die zweite steuerbare Kamera QS2 den Platz des Beklagten B1 erfasst (Fig. 4 b) und Gestik und Mimik des Beklagten B1 aufzeichnet.

Ein weiteres Ausführungsbeispiel des erfindungsgemäßen Gerichtssaal-Mediensystems GMS zeigt Fig. 5. In diesem Ausführungsbeispiel weist das Gerichtssaal-Mediensystem GMS zwei steuerbare Kameras QS1, QS2 auf. Die beiden steuerbaren Kameras QS1, QS2 sind an unterschiedlichen Positionen im Gerichtssaal angeordnet und jeweils unabhängig voneinander steuerbar. Während eine Kamera hinter der Richterbank RB angeordnet ist, ist die andere Kamera vor der Richterbank RB angeordnet. Das Gerichtssaal-Mediensystem GMS weist außerdem zwei zweite Ausgabe-Einrichtungen VZ1, VZ2 auf.

Die erste steuerbare Kamera QS1 weist in diesem Ausführungsbeispiel verschiedene vordefinierte Einstellungen der steuerbaren Parameter auf. In diesen vordefinierten Einstellungen ist die erste steuerbare Kamera QS1 permanent auf den Bereich der Richterbank RB eingestellt, die erste steuerbare Kamera QS1 zeichnet daher permanent ein Bild des Bereichs der Richterbank RB und der jeweils darin aktiven Person R1, BE2, BE3 auf. Dieses Kamerabild wird auf einer und/oder beiden zweiten Ausgabe-Einrichtungen VZ1, VZ2 ausgegeben.

Die zweite steuerbare Kamera QS2 weist dagegen mehrere unterschiedliche vordefinierte Einstellungen auf. Diese umfassen beispielsweise den Zeugenbereich, die Anklagebank A/B mit dem Beklagten B1 und seinem Rechtsanwalt B2, die Staatsanwaltschaft S/K und/oder auch die Richterbank RB. In der ersten vordefinierten Einstellung ist die zweite steuerbare Kamera QS2 auf den Bereich für Zeugen und Gutachter Z/G eingestellt (Fig. 5 a), in der zweiten vordefinierten Einstellung ist die zweite steuerbare Kamera QS2 auf den Bereich der Verteidigung A/B derart ausgerichtet, dass die zweite steuerbare Kamera QS2 auf die vordefinierte Position des Beklagten B1 zentriert ist (Fig. 5 b) und im Kamerabild der zweiten steuerbaren Kamera QS2 die Position des Beklagten B1 und der Beklagte B1 selbst erfasst wird. Das in beiden unterschiedlichen vordefinierten Einstellungen erfasste Kamerabild der zweiten steuerbaren Kamera QS2 wird ebenfalls auf einer und/oder beiden zweiten Ausgabe-Einrichtungen VZ1, VZ2 ausgegeben.

Die Steuerung der zweiten steuerbaren Kamera QS2 erfolgt wiederum mittels akustischer Signale. Das erste akustische Signal wird, wie in den vorhergehenden Ausführungsbeispielen (s. Fig. 3, 4), durch die Stimme eines und/oder die Stimmen mehrerer der an der Richterbank angeordneten Richter R1, BE2, BE3 erzeugt. Jede der Stimmen der an der Richterbank angeordneten Richter R1, BE2, BE3 generiert also das erste akustische Signal, das von den Mikrophonen des Gerichtssaal-Mediensystems GMS lokalisiert wird. Die zweite steuerbare Kamera QS2 wird bei Empfang dieses ersten akustischen Signals auf die erste vordefinierte Einstellung derart eingestellt, dass die zweite steuerbare Kamera QS2 den Bereich für Zeugen und Gutachter Z/G erfasst (Fig. 5 a) und aufzeichnet.

Ein weiteres akustisches Signal ist die Stimme des Beklagten B1, die ebenfalls von den Mikrophonen des Gerichtssaal-Mediensystems GMS lokalisiert wird. Die zweite steuerbare Kamera QS2 wird bei Empfang dieses zweiten akustischen Signals auf die zweite vordefinierte Einstellung derart eingestellt, dass die zweite steuerbare Kamera QS2 den Platz des Beklagten B1 erfasst (Fig. 5 b) und Gestik und Mimik des Beklagten B1 aufzeichnet.

In allen hier dargestellten Ausführungsbeispielen (Fig. 1 - 5) erfolgt die Steuerung der steuerbaren Kameras QS, QS1, QS2 mittels akustischer Signale. Die Steuerung der steuerbaren Kameras QS, QS1, QS2 kann aber auch ausschließlich oder zusätzlich durch ein oder eine Mehrzahl visueller Signale erfolgen, z.B. mittels Handbewegung. Das visuelle Signal wird durch einen optischen Sensor, z.B, eine Kamera, derart erfasst, dass eine Lokalisierung des visuellen Signals erfolgt. Eine weitere Möglichkeit ist die Eingabe elektrischer Signale in eine zentrale Steuereinheit SE (s. Fig. 6 - 8) des Gerichtssaal-Mediensystems GMS durch einen Bediener der zentralen Steuereinheit SE.

Fig. 6 zeigt ein Ausführungsbeispiels des erfindungsgemäßen Gerichtssaal-Mediensystems GMS, wobei eine der Quellen Q1, Q2, Q3, Q4, Q5, QS eine steuerbare Kamera QS ist. Das erfindungsgemäße Gerichtssaal-Mediensystem GMS weist die Matrix-Schaltung MS auf. Die Matrix-Schaltung MS weist eine Mehrzahl von Anschlüssen in Form von Quell-Schnittstellen MSE auf, über die die Matrix-Schaltung MS mit den Quellen Q1, Q2, Q3, Q4, Q5, QS verbunden ist. Jede Quell-Schnittstelle MSE ist mit genau einer Quelle Q1, Q2, Q3, Q4, Q5, QS verbunden. Jede Quelle Q1, Q2, Q3, Q4, Q5, QS weist dazu jeweils eine Schnittstelle QSA auf. Die steuerbare Kamera QS ist mit der Matrix-Schaltung MS über die Ausgabe-Schnittstelle QSA mit der Eingabe-Schnittstelle MSE verbunden.

Zusätzlich ist die Eingabe-Schnittstelle QSS der steuerbaren Kamera QS mit der Ausgabe-Schnittstelle MSS der Matrix-Schaltung MS verbunden.

Die Matrix-Schaltung MS weist außerdem die Ausgabe-Schnittstellen MSA auf, mit denen jeweils eine Ausgabeeinrichtung VE1, VE2, VE3, VZ1, VZ2 verbunden ist. Die erste Ausgabeeinrichtung VE1 ist in diesem Ausführungsbeispiel eine Ausgabeeinrichtung, die den Richtern R1, BE2, BE3 zur Verfügung steht. Die erste Ausgabeeinrichtung VE1 dient ebenfalls als eine Ausgabeeinrichtung für die Justizmitarbeiter, aber auch als Regiemonitor, auf dem die für die zweite Ausgabeeinrichtung VZ1, VZ2 bestimmten Bild- und Toninhalte angezeigt werden können. Die zweite Ausgabeeinrichtung VZ1, VZ2 ist z.B. eine Ausgabeeinrichtung, die für die Öffentlichkeit bestimmte Bild- und Toninhalte anzeigt. Die zweiten Ausgabeeinrichtungen VZ1, VZ2 können sich in einem anderen Raum als die ersten Ausgabeeinrichtungen VE1, VE2, VE3 befinden. Alle Ausgabeeinrichtungen VE1, VE2, VE3, VZ1, VZ2 weisen Komponenten zur Darstellung von Bildinhalten und/oder Toninhalten auf und/oder sind mit solchen verbunden. Jede Ausgabeeinrichtung VE1, VE2, VE3, VZ1, VZ2 weist ebenfalls jeweils eine Schnittstelle QSA auf.

Über die Steuerungseingangsschnittstelle MSS ist die Matrix-Schaltung MS mit der zentralen Steuereinheit SE verbunden. Die zentrale Steuereinheit SE weist dazu die Steuerungsausgangsschnittstelle SSA auf. Für den Anschluss eines Control-Panels CP weist die zentrale Steuereinheit SE die Control-Schnittstelle CS auf, die mit der Ausgabe-Schnittstelle CPS des Control-Panels CP verbunden ist. Das Control-Panel CP weist eine eigene Anzeige sowie ein Bedienelement auf. Auf der zentralen Steuereinheit SE ist die Konfiguration für die Steuerungslogik gespeichert. Die Anbindung der zu steuernden Ausgabeeinrichtungen VE1, VE2, VE3, VZ1, VZ2 und Quellen Q1, Q2, Q3, Q4, Q5, QS kann über Ethernet, RS-232, Infrarot, Relais oder generelle I/O Ports erfolgen. Die Steuerungslogik wird über eine Cloud bereitgestellt und kann in einen Speicher der zentralen Steuereinheit SE geladen werden. Mit der zentralen Steuereinheit SE ist ebenfalls die Konfigurationssteuereinheit KSE lösbar verbunden, die in diesem Ausführungsbeispiel separat angeordnet ist. Die zentrale Steuereinheit SE weist dazu eine Schnittstelle auf, ebenso die Konfigurationssteuereinheit KSE.

Über das Bedienelement des Control-Panels CP kann der Bediener des Control-Panels CP die von der steuerbaren Kamera QS empfangenen Bild- und/oder Toninhalte bearbeiten. Insbesondere können die angezeigten Bild- und/oder Toninhalte über die separate Steuereinheit SE z.B. ausgeschnitten und/oder zugeschnitten werden und/oder die Lautstärke geändert werden.

Zur Konfiguration der steuerbaren Kameras QS, QS1, QS2 des erfindungsgemäßen Gerichtssaal-Mediensystems GMS erfolgt eine Abfrage von Daten zur Installation und/oder Konfiguration der zentralen Steuereinheit SE. Die Daten sind in einem Speicher der separaten Konfigurationssteuereinheit KSE gespeichert. Die Daten enthalten die für den betreffenden Gerichtssaal, in dem die Gerichtssaal-Mediensystemsteuerung GMS angewandt werden soll, installations- und/oder konfigurationsrelevante Einstellungen. Diese Daten werden von der zentralen Steuereinheit SE eingelesen. Danach erfolgt die Installation und/oder Konfiguration auf der zentralen Steuereinheit SE. Auf der zentralen Steuereinheit SE wird dazu ein Programm ausgeführt.

Fig. 7 und Fig. 8 zeigen eine beispielhafte Anordnung eines Ausführungsbeispiels der erfindungsgemäßen Gerichtssaal-Mediensystemsteuerung GMS in einem Gerichtssaal. Der Gerichtssaal weist einen öffentlich zugänglichen Bereich für Zuschauer P, eine Richterbank RB mit jeweils einem Platz für den Vorsitzenden Richter R1 und zwei Beisitzern BE2, BE3, einen Bereich Z/G für Zeugen/Gutachter ZG1, sowie jeweils einen Bereich für die Prozessparteien, Klage S/K und Verteidigung A/B, auf.

Die Gerichtssaal-Mediensystemsteuerung GMS weist als zentrales Element die Matrix-Schaltung MS auf, mit der sämtliche Quellen Q1, Q2, Q3, Q4, Q5, QW, QS über Quell-Schnittstellen QSA verbunden sind. Die Quellen Q1, Q2, Q3, Q4, Q5, QW, QS sind in diesem Ausführungsbeispiel mobile Endgeräte (Laptops) des Vorsitzenden Richters Q1, der beiden Beisitzer Q2, Q3, sowie jeweils ein mobiles Endgerät Q4, Q5 der beiden Prozessparteien. Zusätzlich wird über einen freien Anschluss die Möglichkeit bereitgestellt, dass ein Zeuge und/oder ein Gutachter eine Quelle QW anschließen kann. Außerdem ist mit der Matrix-Schaltung MS eine steuerbare Kamera QS verbunden.

Mit der Matrix-Schaltung MS sind weiterhin die Ausgabeeinrichtungen VDM, VE2, VE3, VZ1, VZ2 über Ausgabe-Schnittstellen MSA angeschlossen. Die Ausgabeeinrichtung VDM ist dabei die Master-Ausgabeeinrichtung und gibt Bild- und/oder Toninhalte dem Vorsitzenden Richter R1 aus. Die ersten Ausgabeeinrichtungen VE2, VE3 sind dafür eingerichtet, Bild- und/oder Toninhalte den Beisitzern auszugeben.

Die zweiten Ausgabeeinrichtungen VZ1, VZ2 sind öffentlich zugängliche Ausgabeeinrichtungen, in diesem Ausführungsbeispiel Großbildschirme oder -leinwände. Die Matrix-Schaltung MS ist in diesem Ausführungsbeispiel in dem Gerichtssaal selbst angeordnet, möglich ist aber auch eine Anordnung der Matrix-Schaltung MS in einem entfernt gelegenen Ort, z.B. dem IT- und Server-Raum des Gerichtsgebäudes. Mit der zentralen Steuereinheit SE ist ebenfalls die Konfigurationssteuereinheit KSE lösbar verbunden, die separat angeordnet ist.

Die Steuerung des Gerichtssaal-Mediensystem GMS erfolgt über ein Control-Panel CP. Der Vorsitzende Richter R1 kann mittels des Control-Panels CP die gesamte Technik des Gerichtssaal-Mediensystem GMS im Sitzungssaal steuern. Es ist aber auch möglich, diese Steuerung über das Control-Panel CP an eine andere Person zu übertragen, so dass der Vorsitzende Richter R1 damit nicht zusätzlich belastet wird. Der Bediener des Control-Panels CP wählt mittels des Bedienelements des Control-Panels CP eine der Quellen Q1, Q2, Q3, Q4, Q5, QW, QS zum Empfang der Bild- und/oder Toninhalte. Diese Auswahl wird von dem Control-Panel CP an die zentrale Steuereinheit SE gesendet.

Die empfangenen Bild- und/oder Toninhalte werden dabei nicht auf der Anzeige des Control-Panel CP selbst angezeigt, sondern zunächst auf der Master-Ausgabeeinrichtung VDM, die eine Vorschaufunktion ausübt. Hier kann der Vorsitzende Richter R1 die empfangenen Bild- und/oder Toninhalte prüfen. Zusätzlich kann der Vorsitzende Richter R1 mittels der Master-Ausgabeeinrichtung VDM die ausgewählten und auf der Master-Ausgabeeinrichtung VDM angezeigten Bild- und/oder Toninhalte verändern und bearbeiten, z.B. ausschneiden, zuschneiden oder die Lautstärke ändern. Außerdem kann der Vorsitzende Richter R1 die von der steuerbaren Kamera QS empfangenen Bild- und/oder Toninhalte ebenfalls in gleicher Weise mittels des Control-Panels CP bearbeiten. Im Anschluss wählt der Vorsitzende Richter R1 oder der Bediener des Control-Panels CP mittels des Control-Panels CP eine oder eine Mehrzahl der Ausgabeeinrichtungen VDM, VE2, VE3, VE4, VZ1, VZ2 zur Ausgabe der von der ausgewählten Quelle Q1, Q2, Q3, Q4, Q5, QW, QS empfangenen Bild- und/oder Toninhalte aus. Die empfangenen Bild- und/oder Toninhalte werden dann auf der oder den ausgewählten Ausgabeeinrichtungen VDM, VE2, VE3, VE4, VZ1, VZ2 angezeigt.

### BEZUGSZEICHENLISTE

- GMS: Gerichtssaal-Mediensystem
- VE1, VE2, VE3, VE4, VE5: Erste Ausgabeeinrichtung
- VDM: Master-Ausgabeeinrichtung
- VZ1, VZ2: Zweite Ausgabeeinrichtung
- MSA: Ausgabe-Schnittstelle der Matrix-Schaltung
- MS: Matrix-Schaltung
- MSE: Eingabe-Schnittstelle der Matrix-Schaltung
- MSS: Steuerungseingangsschnittstelle
- SE: Separate Steuereinheit
- SSA: Steuerungsausgangsschnittstelle
- CS: Control-Schnittstelle
- CPS: Ausgabe-Schnittstelle Control-Panel
- CP: Control-Panel
- Q1, Q2, Q3, Q4, Q5, Q6: Quelle
- QS, QS1, QS2: Steuerbare Quelle/Steuerbare Kamera
- QW: Freie Quelle
- QSA: Quell-Schnittstelle
- RB: Richterbank
- R1: Vorsitzender Richter
- BE2, BE3: Beisitzender Richter
- P: Zuschauerbereich
- Z/G: Bereich für Zeugen und Gutachter
- ZG1: Zeuge/Gutachter
- S/K: Bereich für Staatsanwalt/Klage
- K1: Kläger
- A/B: Bereich für Verteidigung
- A1: Verteidiger
- B1: Beklagter
- GMS: Gerichtssaal-Mediensystem
- VE1, VE2, VE3, VE4, VE5: Erste Ausgabeeinrichtung

## Patentansprüche

1. Verfahren zur Steuerung einer steuerbaren Kamera (QS, QS1, QS2) mit den Verfahrensschritten
• Empfangen eines Signals
• Lokalisieren der Position der Quelle des Signals
• Einstellen einer vordefinierten Einstellung eines der steuerbaren Parameter der steuerbaren Kamera (QS, QS1, QS2).

2. Verfahren zur Steuerung einer steuerbaren Kamera (QS, QS1, QS2) nach Anspruch 1
**dadurch gekennzeichnet, dass**
ein akustisches und/oder ein visuelles und/oder ein elektrisches Signal empfangen wird.

3. Verfahren zur Steuerung einer steuerbaren Kamera (QS, QS1, QS2) nach Anspruch 1 oder 2
**dadurch gekennzeichnet, dass**
das akustische Signal über ein Stereo-Mikrophon empfangen wird.

4. Verfahren zur Steuerung einer steuerbaren Kamera (QS, QS1, QS2) nach Anspruch 3
**dadurch gekennzeichnet, dass**
die Quelle des akustischen Signals über zwei Mikrophone lokalisiert wird.

5. Verfahren zur Steuerung einer steuerbaren Kamera (QS, QS1, QS2) nach einem oder mehreren der vorhergehenden Ansprüche 2 bis 4
**dadurch gekennzeichnet, dass**
das visuelle Signal über eine Kamera und/oder einen Fotodetektor empfangen wird,
wobei die Quelle des visuellen Signals aus den von der Kamera und/oder dem Fotodetektor empfangenen Signal lokalisiert wird.

6. Verfahren zur Steuerung einer steuerbaren Kamera (QS, QS1, QS2) nach einem oder mehreren der vorhergehenden Ansprüche 2 bis 5
**dadurch gekennzeichnet, dass**
das elektrische Signal über ein Eingabegerät empfangen wird.

7. Verfahren zur Steuerung einer steuerbaren Kamera (QS, QS1, QS2) nach Anspruch 6
**dadurch gekennzeichnet, dass**
das elektrische Signal über die Position eines Eingabegerätes lokalisiert wird.

8. Verfahren zur Steuerung einer steuerbaren Kamera (QS, QS1, QS2) nach einem oder mehreren der vorhergehenden Ansprüche
**dadurch gekennzeichnet, dass**
die vordefinierte Einstellung eine Zoom-Einstellung umfasst,
wobei die Zoom-Einstellung so gewählt wird, dass mehrere Personen (R1, BE2, BE3, ZG1, K1, A1, B1) im Kamerabild erfasst werden, und
wobei die im Erfassungsbereich der Kamera befindliche Personen (R1, BE2, BE3, ZG1, K1, A1, B1) ermittelt und die Zoom-Einstellung so gewählt wird, dass das Kamerabild auf die im Erfassungsbereich der Kamera ermittelten Personen (R1, BE2, BE3, ZG1, K1, A1, B1) im Kamerabild gezoomt wird.

9. Verfahren zur Steuerung einer steuerbaren Kamera (QS, QS1, QS2) nach einem oder mehreren der vorhergehenden Ansprüche
**dadurch gekennzeichnet, dass**
die vordefinierte Einstellung eine vordefinierte Position umfasst, auf die das Kamerabild zentriert wird,
wobei die vordefinierte Position unterschiedlich ist zur (eine andere Position als die) lokalisierten Quelle des empfangenen Signals, und
wobei das von der Kamera in der vordefinierten Position erfasste Bild die lokalisierte Position der Quelle des empfangenen Signals umfasst.

10. Verfahren zur Steuerung einer steuerbaren Kamera (QS, QS1, QS2) nach einem oder mehreren der vorhergehenden Ansprüche
**dadurch gekennzeichnet, dass**
eine vordefinierte Einstellung eines der steuerbaren Parameter der steuerbaren Kamera (QS, QS1, QS2) eingerichtet wird.

11. Verfahren zur Steuerung einer steuerbaren Kamera (QS) nach Anspruch 10
**dadurch gekennzeichnet, dass**
mehrere vordefinierte Einstellungen der steuerbaren Parameter der steuerbaren Kamera (QS, QS1, QS2) eingerichtet werden.

12. Verfahren zur Steuerung einer steuerbaren Kamera (QS) nach Anspruch 11
**dadurch gekennzeichnet, dass**
die vordefinierten Einstellungen mehrere unterschiedliche Positionen umfassen.

13. Gerichtssaal-Mediensystem (GMS) mit einem Signalempfänger, einer steuerbaren Kamera (QS, QS1, QS2), einer Steuereinheit (SE) und einem Speicher
**dadurch gekennzeichnet, dass**
über den Signalempfänger ein Signal empfangbar und die Position des Signals lokalisierbar ist,
wobei auf der Steuereinheit (SE) ein Softwareprogramm ausführbar ist, durch das die steuerbare Kamera (QS, QS1, QS2) in eine im Speicher abgelegte vordefinierte Einstellung einstellbar ist.

14. Gerichtssaal-Mediensystem (GMS) nach Anspruch 13
**dadurch gekennzeichnet, dass**
der Signalempfänger geeignet ist, ein akustisches, ein elektrisches und/oder ein visuelles Signal zu empfangen und das Gerichtssaal-Mediensystem (GMS) dafür geeignet ist, das empfangene Signal zu lokalisieren.

15. Gerichtssaal-Mediensystem (GMS) nach Anspruch 14
**dadurch gekennzeichnet, dass**
der Signalempfänger ein Mikrophon, ein Eingabegerät, ein Fotodetektor und/oder eine Kamera ist.
